**Europäisches Patentamt**

**European Patent Office**

**Office européen des brevets**

(19)

(11) Veröffentlichungsnummer: **0 037 545**
A2

(12) **EUROPÄISCHE PATENTANMELDUNG**

(21) Anmeldenummer: **81102390.2**

(22) Anmeldetag: **30.03.81**

(51) Int. Cl.³: **F 25 D 29/00**
**G 01 K 11/16, A 47 J 41/00**
**B 65 D 81/38**

(30) Priorität: **03.04.80 DE 3013180**

(43) Veröffentlichungstag der Anmeldung:
**14.10.81 Patentblatt 81/41**

(84) Benannte Vertragsstaaten:
**AT BE CH DE FR GB IT LI LU NL SE**

(71) Anmelder: Zorn, Manfred, Dipl.-Kfm.
Reichensand 9
D-6300 Giessen(DE)

(72) Erfinder:
Der Erfinder hat auf seine Nennung verzichtet

(74) Vertreter: Zmyj, Erwin, Dipl.-Ing.
Postfach 95 04 28
D-8000 München 95(DE)

(54) **Tragbarer Isolierbehälter, insbesondere Kühltasche oder Kühlbox.**

(57) In der Wand eines tragbaren Isolierbehälters (1), z. B. einer Kühltasche oder einer Kühlbox ist ein isoliertes Fenster (6, 9) vorgesehen, an dessen Innenseite Flüssigkristalle in Form von Symbolen (7), Streifen oder Flächen (10) angeordnet sind, welche eine Temperaturveränderung im Inneren dieses Isolierbehälters durch entsprechende Farbänderung anzeigen. Das isolierte Fenster verhindert die Bildung einer Kältebrücke durch die Wand des Isolierbehälters hindurch. An Stelle der Flüssigkristalle können an der Innenseite des isolierten Fensters auch andere Temperaturanzeigevorrichtungen angeordnet sein.

EP 0 037 545 A2

Dip.-Kfm. Manfred Zorn
Reichensand 9, 6300 Gießen

**Tragbarer Isolierbehälter, insbesondere Kühltasche oder Kühlbox**

Die Erfindung bezieht sich auf einen tragbaren Isolierbehälter, insbesondere Kühltasche oder Kühlbox.

Kühltaschen oder Kühlboxen, die mit oder ohne Kühlakkus, d. h. Kühlelementen benutzt werden, werden immer häufiger für den Transport von Tiefkühlkost oder Arzneimitteln verwendet, die während ihres Transportes eine bestimmte obere Temperaturgrenze nach Möglichkeit nicht überschreiten sollen. Insbesondere soll bei Tiefkühlkost gewährleistet sein, daß diese auf dem Transport von der Tiefkühltruhe des Ladengeschäfts bis zur Aufbewahrung in der häuslichen Tiefkühltruhe nicht auftaut.

Ein Temperaturanstieg in einer Kühltasche oder einer Kühlbox läßt sich durch zusätzliche Kühlakkus verhindern, die auf chemischen Wege Kälte erzeugen und zu jedem beliebigen Zeitpunkt aktivierbar sind. Um jedoch festzustellen, wann der Zeitpunkt gekommen ist, in welchem ein solcher zusätzlicher Kühlakku aktiviert werden muß, ist es erforderlich die Kühltasche oder die Kühlbox zu öffnen, um festzustellen, ob die dort herrschende Temperatur noch ausreicht, um das Tiefkühlgut ohne Auftauvorgang weiter transportieren zu können. Bei diesem Kontrollvorgang dringt jedoch warme Luft in die Kühltasche oder die Kühlbox ein, wodurch die unerwünschte Erwärmung im Inneren des Isolierbehälters noch beschleunigt wird.

Es ist bereits eine Kühl- und Frischhaltehaube für Konditoreigeschäfte bekannt (DE-Gbm 74 37 844) die, zum Frischhalten von Sahne- oder Obsttorten dient und welche im oberen Teil einen nach außen vorstehend angesetzten zusätzlichen Raum für die Aufnahme eines Kälteelementes aufweist. In dem Verschluß dieses zusätzlichen Aufnahmeraumes ist eine Temperaturanzeigevorrichtung vorgesehen, die die Temperatur des Kühlelementes nicht aber die Temperatur im inneren der Haube anzeigt, weil das Kühlelement unmittelbar an der Temperaturanzeige anliegt und sich zwischen dieser Temperaturanzeige und dem Inneren der Haube befindet. Hierdurch ist nur die Kühlwirkung des Kühlelementes anzeigbar.

Bei einer weiteren bekannten Vorrichtung (FR-PS 13 30 206) ist eine Kühlvorrichtung für Flaschen dargestellt, die entsprechende Aufnahmen für die Flaschen aufweist und im inneren zur Aufnahme einer Kühlsohle oder von Wasser geeignet ist. Dieses Wasser wird gefroren, wodurch die in die entsprechenden Aufnahmen einlegbaren Flaschen gekühlt werden können. Um festzustellen, ob das Wasser noch gefroren ist, reicht ein Temperaturfühler in das Innere des Wasseraufnahmebehälters hinein.

Beiden bekannten Ausführungsformen ist gemeinsam, daß es sich um stationäre Einrichtungen handelt, die obendrein verhältnismäßig teuere Thermometer zur Überwachung der Temperatur aufweisen. Darüberhinaus wird durch diese Thermometer nur die Temperatur des Kühlelementes und nicht die Temperatur im Inneren der Haube bzw. der zu kühlenden Flaschen angezeigt.

Aufgabe der Erfindung ist es eine Möglichkeit für die Temperaturkontrolle im Inneren auch von tragbaren Isolierbehältern wie z. B. Kühltaschen zu schaffen, ohne diese öffnen zu müssen.

Diese Aufgabe wird erfindungsgemäß dadurch gelöst, daß in der Wand des Isolierbehälters ein isoliertes Fenster vorgesehen ist, an dessen Innenseite eine von außen sichtbare Temperaturanzeigevorrichtung angeordnet ist, die unmittelbar die im Behälter herrschende Temperatur anzeigt. Vorzugsweise sind zur Temperaturanzeige an der Innenseite des isolierten Fensters Flüssigkristalle in Form von Symbolen, Streifen oder Flächen angeordnet.

Durch diese Maßnahme wird auch für preisgünstige tragbare Isolierbehälter, wie Isoliertaschen oder Isolierboxen, die Möglichkeit einer Temperaturkontrolle ohne Öffnen des Isolierbehälters geschaffen. Das Eindringen von warmer Luft in den Isolierbehälter ist damit vermieden. Das isolierte Fenster, welches in Form von einer Doppelverglasung ausgeführt sein kann, wobei außer Glas auch Kunststoffscheiben zweckmäßigerweise verwendet werden können, verhindert eine Unterbrechung der Isolierwirkung des Isolierbehälters an dieser Stelle und gestattet die Beobachtung der Temperaturanzeigevorrichtung. Bei der Anordnung von Flüssigkristallen an der Innenseite des isolierten Fensters wird der Vorteil erzielt, daß diese praktisch keinen zusätzlichen Raum beanspruchen, eine äußerst billige Temperaturanzeige bilden und das Gewicht des Isolierbehälters praktisch nicht erhöhen. Die Temperatur- anzeige kann in Form von exakten Zahlenangaben vorgenommen werden. In den meisten Fällen genügt es jedoch zwei oder drei Bereiche in Form von Streifen oder Flächen vorzusehen, die eine Temperaturänderung in einen kritischen Bereich hinein durch entsprechende Farbänderung anzeigen.

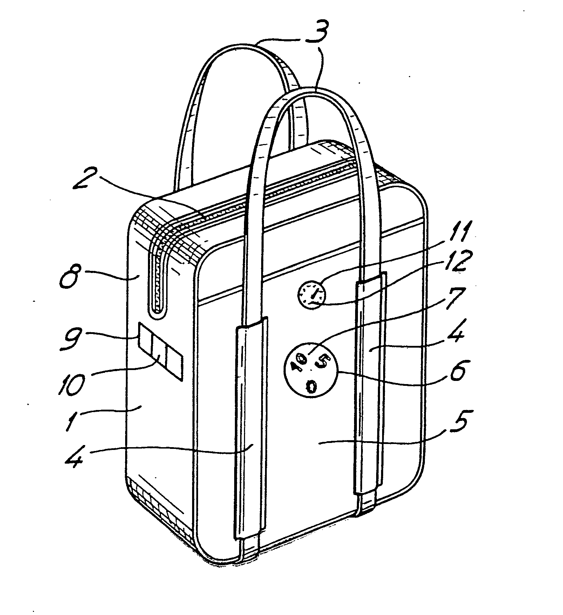

Die Erfindung ist in der Zeichnung beispielsweise dargestellt, in deren einzigen Figur eine Kühltasche in schaubildlicher Weise dargestellt ist, bei welcher die Erfindung Anwendung findet.

Eine Kühltasche 1, die aus felxiblem Material besteht und einen Reißverschluß 2 aufweist, ist mit Tragegurten 3 versehen, die durch Patten 4 geführt sind, welche an der Vorder- und Rückseite der Kühltasche 1 befestigt sind.

An der mit 5 bezeichneten Vorderseite der Kühltasche ist ein Fenster 6 eingearbeitet, welches isoliert ist, damit an dieser Stelle die Isolierwirkung der Kühltasche nicht unterbrochen ist. An der Innenseite des Fensters sind innerhalb aufklebbarer Symbole Flüssigkristalle angeordnet, die bei einer bestimmten Temperatur eine bestimmte Färbung zeigen. Diese Symbole sind mit dem Bezugszeichen 7 versehen und entsprechend dem kreisrunden Fenster 6 ebenfalls in Kreisform angeordnet.

Dieses Fenster in der Wand der Kühltasche 1 kann beliebige Form aufweisen. Es muß nur die Betrachtung einer an der Fensterinnenseite vorgesehenen Temperaturanzeigevorrichtung ermöglichen. An der Schmalseite 8 der Kühltasche 1 ist beispielsweise ein rechteckiges Fenster 9 vorgesehen, an dessen Innenseite drei Bereiche 10 mit Flüssigkristallen vorgesehen sind, so daß die in der Kühltasche herrschende Temperatur nicht durch exakte Zahlenangabe kenntlich gemacht wird, sondern die einzelnen Bereiche zeigen durch unterschiedliche Färbung an, ob ein kritischer Temperaturbereich schon erreicht ist oder nicht.

Eine weitere Möglichkeit der Temperaturanzeige besteht darin, daß an der Innenseite eines isolierten Fensters 11 ein Thermometer 12 nach Art eines Flüssigkeitsausdehnungsthermometers angeordnet ist.

Patentansprüche

1. Tragbarer Isolierbehälter, insbesondere Kühltasche oder Kühlbox, dadurch g e k e n n z e i c h - n e t , daß in der Wand des Isolierbehälters (1) ein isoliertes Fenster (6, 9, 11) vorgesehen ist, an dessen Innenseite eine von außen sichtbare Temperaturanzeigevorrichtung (7,10,12) angeordnet ist, die unmittelbar die im Behälter herrschende Temperatur anzeigt.

2. Isolierbehälter nach Anspruch 1, dadurch g e - k e n n z e i c h n e t , daß zur Temperatur- anzeige an der Innenseite des isolierten Fensters (6, 9) Flüssigkristalle in Form von Symbolen (7), Streifen oder Flächen (10) angeordnet sind.